# EUROPEAN PATENT APPLICATION

(11) **EP 4 844 336 A1**
(43) Date of publication of application: **25.11.2026**
(21) Application number: 26179112.3
(22) Date of filing: 18.05.2026
(51) Int. Cl.: G01B 11/275, G01B 11/27

(54) **VEHICLE ASSISTANCE APPARATUS**

(30) Priority: 19.05.2025 IT 202500011236
(71) Applicant: NEXION S.p.A., 42015 Correggio (RE) (IT)
(72) Inventor: CAMPARINI, Roberto, BAGNOLO IN PIANO (REGGIO EMILIA) (IT); DALLARA, Simone, GATTATICO (REGGIO EMILIA) (IT); PESARESI, Andrea, CORREGGIO (REGGIO EMILIA) (IT)
(74) Representative: Conti, Marco

(57) **Abstract**

Described is an apparatus (1) for assistance of a vehicle (9) positioned in a work area comprising a base (2), a supporting structure (3) including a pole (30), provided with a front face (31), the supporting structure (3) comprising a rear face (32), the apparatus further comprising a horizontal bar (4), provided at the ends with cameras (40), operatively facing the work area to view targets positioned on the wheels of the vehicle (9), and a calibration device (5), configured to assist the user in operations for calibration of an ADAS sensor of the vehicle (9), movable vertically relative to the supporting structure (3), the apparatus comprising a control unit, connected to the cameras (40) for deriving information on a alignment of the vehicle (9), and a connection unit (6), for connecting the bar (4) and the calibration device (5) to the supporting structure (3), a vertical guide (62) and a slider (63), wherein the bar (4) is connected to the slider (63) for sliding vertically, in such a way that the pole (30) remains interposed between the bar (4) and the calibration device (5).

## Description

This invention relates to a vehicle assistance apparatus positioned in a work area. In the field of vehicle assistance apparatuses, there are prior art apparatuses having, amongst others, the following functions:
- detecting the alignment of the vehicle for the purposes of modifying, for example, the characteristic angles of the wheels;
- calibrating one or more ADAS sensors of the vehicle, to increase the driving safety.

These functions are usually performed by apparatuses separate from each other, the apparatuses for detecting the alignment and the ADAS calibration apparatuses. Both are characterised by a load-bearing structure, movable on the workshop floor, on which are mounted, respectively, cameras for detecting the alignment, and a panel or a screen, in the case of the ADAS calibration. The cameras and/or panels of the ADAS calibration apparatuses must be able to be moved relative to the vehicle in order to be able to position themselves correctly relative to the vehicle.

In this context, it is known that the structure of the alignment detection apparatus and the structure of the ADAS calibration apparatus are integrated in a single main structure, in such a way as to make a single compact structure and perform assistance to the vehicle more quickly, using the common features between alignment detection apparatuses and ADAS calibration apparatuses.

For example, the documents WO2019238300A1, US2024312264A1, CN116086829A, US12092757B2 describe integrated systems which are able to assist the user both in the alignment operations and in the ADAS calibration operations.

However, the prior art solutions have some drawbacks. For example, the need remains of making compact and lightweight structures, which can be easily moved by the user. In fact, the integrated structures tend to be heavy, in particular those which use a TV screen as an ADAS calibration system. Further, there is the need to have flexible and/or modular structures, which can be adapted to different vehicles and to different conditions of use. In order to satisfy these needs, it is necessary to determine the relative position between the alignment detection apparatus (for example, the supporting bar of the cameras) and the ADAS calibration apparatuses (for example, the TV screen).

Further, there are prior art solutions such as those described in patent document EP3875894A1, in the name of the same Applicant, wherein cameras positioned on a horizontal bar are configured for viewing targets associated with the calibration panel.

For this reason, the aim of this invention is to provide a vehicle assistance apparatus which overcomes the above-mentioned disadvantages of the prior art. In particular, the aim of this invention is to provide a compact, flexible apparatus which is able to perform alignment and ADAS calibration operations in a practical and efficient manner.

Further, the aim of this invention is to provide a modular apparatus, wherein, for example, the alignment detection and ADAS calibration functions can be selectively coupled in a single structure, or can be separated into different structures, depending on the requirements of the user.

These aims are fully achieved by the apparatus according to the invention as characterized in the appended claims.

In particular, this invention provides a vehicle assistance apparatus operatively positioned in a service area. The apparatus comprises a base. Preferably, the base is provided with pivoting wheels, for moving on a supporting surface. According to an example, the base is a single base, that is to say, a single structure. The apparatus comprises a supporting structure. The supporting structure is connected to the base. The supporting structure extends vertically from the base. The supporting structure includes a pole. The pole is provided with a front face, operatively facing the work area. The supporting structure comprises a rear face. The pole is interposed between the front face and the rear face. The apparatus comprises a horizontal bar. The horizontal bar is elongate between a first end and a second end. The horizontal bar is provided, at the first and the second end, with cameras.

According to an example, the horizontal bar is a foldable bar. According to an example, the horizontal bar includes a further camera. For example, the bar includes the two cameras positioned at the end and a third camera. The cameras are operatively facing towards the work area. The cameras are configured to view at least one vehicle target. The term "vehicle target" means a target associated with the wheels of the vehicle. The vehicle targets may comprise, for example, graphical representations and/or other types of graphical references, and their viewing allows the determination of one or more characteristic angles of the wheels of the vehicle. The vehicle targets can be coupled as one with the wheels using, for example, clamps or other fixing devices. The apparatus comprises a calibration device. The calibration device is configured to assist the user in calibration operations of an ADAS sensor of the vehicle. The calibration device is positioned in front of the front face of the supporting structure. The calibration device is movable vertically relative to the supporting structure. According to an example, the calibration device is movable independently of the horizontal bar. Alternatively, the calibration device may be integral with the horizontal bar, in such a way that the calibration device is movable vertically together with the horizontal bar. The apparatus comprises a control unit. The control unit is connected to the cameras. The control unit is configured to process images captured by the cameras and to derive information on a alignment of the vehicle. The control unit is programmed to assist the user in the operations for calibrating the ADAS sensors. According to an example, the control unit is configured to exchange data, directly or indirectly, with an electronic control unit of the vehicle. According to a further example, or in a predetermined calibration step, the control unit might not exchange data with the electronic control unit of the vehicle. In effect, one of the possible configurations comprises a communication of the control unit and/or of the ADAS sensor with a "third" unit, such as, for example, a calibration system not present physically in the workshop or not directly connected to the apparatus. It should be noted that the control unit can comprise the "third calibration system". Thus, in this example, the control unit may consist of two distinct entities, one physically present in the workshop and one remote entity. The apparatus comprises a connection unit. The connection unit is configured for connecting the horizontal bar and the calibration device to the supporting structure. The apparatus comprises a vertical guide. The vertical guide is positioned at the rear face of the supporting structure. The connection unit includes a slider. The slider is slidably coupled to the vertical guide. The horizontal bar is connected to the slider, so that the pole is interposed between the horizontal bar and the calibration device. This solution is particularly advantageous, since it allows the horizontal bar and the calibration device to be positioned on opposite faces of the pole, making the calibration apparatus more balanced. In effect, both the horizontal bar, which supports the cameras, and the calibration device, which may comprise a panel or a TV screen, are two particularly heavy elements. It must also be considered that, usually, both the bar and the calibration device must be able to be moved and translated vertically upwards, making the structure more subject to oscillations and more insecure. Thus, interposing the pole with the bar and the screen increases the stability, the safety and the ease of use of the apparatus.

According to an example, the apparatus comprises a further vertical guide. The further vertical guide is positioned at the front face. According to an example, the connection unit includes a further slider. The further slider is slidably coupled to the further vertical guide. According to this example, the horizontal bar is connected to the slider and the calibration device is connected to the further slider. That solution makes it possible to uncouple and make independent the vertical sliding of the horizontal bar and the vertical sliding of the calibration device.

In an example, the control unit is configured to receive positioning information. The positioning information are representative of a relative position between the calibration device and the horizontal bar. Indeed, the independence of movement between the calibration device and the horizontal bar generates an unknown in the control unit. Advantageously, the control unit is then configured to receive or derive positioning information.

In an example, the apparatus includes a first synchronization target and a second synchronization target. The first synchronization target is connected to the horizontal bar. The second synchronization target is connected to the calibration device. The apparatus includes a synchronization camera. The synchronization camera is configured to visualize the first and second synchronization targets. Moreover, the control unit is connected to the synchronization camera. The control unit is configured to process image data of the first and second synchronization targets. The control unit is programmed to determine synchronization information. The synchronization information represents a mutual positioning between the calibration device and the horizontal bar. Note that synchronization information may correspond to positioning information. Therefore, this solution advantageously allows for the determination of the mutual positioning between the horizontal bar (for detecting the alignment) and the calibration device (for ADAS calibration). In fact, the horizontal bar and the calibration device are components that can move independently. The control unit, knowing their positions (via the synchronization camera that sees the first and second synchronization targets), determines their relative positioning through substantially a geometric calculation. Furthermore, the control unit can then compare this positioning to the vehicle itself.

In an example, the pole comprises a lower portion and an upper portion. The lower portion is proximal to the base. The upper portion is distal from the base along the vertical direction. The synchronization camera is connected to the upper portion of the pole. In this way, the synchronization camera can advantageously look from above, capturing both the first and second synchronization targets. Each of the first and second synchronization targets can be connected to the front or rear of the horizontal bar and the calibration device. Furthermore, the first and second synchronization targets are preferably oriented upward. In general, the first and second synchronization targets can have different orientations to facilitate viewing by the synchronization camera.

In an example, the apparatus includes a calibration bar. The calibration bar is connected to the calibration device (either fixedly or movably). The calibration bar is configured to support a calibration element, such as a mirror for calibrating a radar sensor (or a doppler simulator or a LiDAR panel). In an example, the second synchronization target is connected to the calibration bar. This is particularly advantageous if the bar is movably connected to the calibration device. In this case, it may be necessary to determine the relative position between the bar and the horizontal bar, which is different from the relative position between the calibration device and the horizontal bar (since they are movably connected).

In one example, the synchronization camera is an infrared camera. This is particularly convenient for viewing the calibration targets and properly transmitting the image to the control unit.

In an example, the apparatus includes a calibration target. The calibration target is connected to the calibration bar. The calibration target can alternatively be connected to the calibration device (for example, to a calibration device frame). The calibration target can also correspond to the second synchronization target or be an additional target. The calibration target can be removably connected to the calibration bar.

In an example, at least one camera of the horizontal bar is configured to see the calibration target. The control unit is configured to receive image data from the calibration target. The control unit is configured to process this data to derive a mutual positioning between the calibration device and the horizontal bar. The use of a horizontal bar camera can also be an alternative to the synchronization camera, but this requires that the calibration target (the second synchronization target or an additional target) be conveniently visible from the bar camera (for this reason, the calibration target is preferably connected to the calibration bar).

Using a calibration target mounted on the calibration bar can also be particularly convenient for performing calibration operations on the device (particularly for calibration of the calibration device). In other words, the calibration target can also be used to determine the relative positioning of the horizontal bar and the calibration bar during the calibration phase of the device, prior to the device's first use.

In an example, the device includes an upper camera. The upper camera is connected to the pole. Preferably, the upper camera is connected to the upper portion of the pole. Preferably, the upper camera is connected to the front face of the pole. The upper camera is oriented towards the working area. The control unit is connected to the upper camera to detect the distance between the calibration device and the ADAS sensor of the vehicle being calibrated. This solution is particularly convenient because some calibration procedures are based on the distance between the calibration device and the sensor to be calibrated, and not the distance between the calibration device and the vehicle's axle (which is known because the horizontal bar cameras see also targets on the vehicle's wheels). Alternatives to the upper camera include, for example, spacers or laser rangefinders.

In an example, the apparatus may include a calibration column. The calibration column can be separated from the base and can be positioned in front of the front face of the pole, so as to be interposed between the support structure and the vehicle. The calibration column is configured to calibrate a vehicle radar sensor. Specifically, the calibration column can include a reflector (visible to the radar) and a laser beam emitter, which serves as a reference to align the column with the vehicle's centreline. A column target can be mounted on the calibration column. The column target can be viewed by the upper camera. In this way, the control unit can determine the relative position of the horizontal bar or calibration device with respect to the calibration column.. Thus, the calibration device is connected in a removable fashion to the connection unit and is connected in a removable fashion to the housing.

According to an example, the apparatus comprises a service target. The service target is associated with the calibration device. According to an example, the service target is rigidly connected to the calibration device. The service target is positioned so that it enters the field of vision of one of the cameras. In effect, when the horizontal bar and the calibration device are uncoupled, it is necessary to determine the relative position between the bar and the calibration device. This need can be met through the service targets. According to an example, the control unit is configured to process image data of the vehicle and service targets, to determine positioning information. The positioning information is information representative of a mutual positioning between the calibration device and the vehicle. For example, the positioning information may include spatial coordinates. According to an example, each camera includes a prior art optical system. It should be noted that the expression "prior art optical system" means the fact that the physical characteristics of the optical system are known to the control unit. For example, there may be known features representative of the distortion of the lens of the optical system. According to an example, the control unit is programmed to process the image data relevant to the service target, to reduce a blurring, depending on the type of optical system. As mentioned, the service target is essential in the configurations in which the horizontal bar and the calibration device are uncoupled from each other. In effect, in these configurations, it is essential to know the reciprocal position between the bar and the screen, to allow the control unit to derive the position of the screen relative to the vehicle. In order to allow this, the control unit compares the images of the vehicle targets and the images of the service target and, by means of a data calculation and processing step, determines a relative position. According to an example, the control unit is configured to receive positioning information, representative of a relative position between the calibration device and the horizontal bar. The control unit is programmed for processing the images of the cameras and the positioning information to derive a mutual positioning between the calibration device and the vehicle. In other words, the control unit processes the positioning information to determine the position between the bar and the calibration device, and, in addition, processes the images of the targets on the vehicle to obtain a position between the calibration device and the vehicle. In fact, the output of the processing of the images is the position between the calibration device and the vehicle, which is what the manufacturer requests to proceed with the calibration procedure of the ADAS sensor. According to an example, the positioning information comprises images of the service target, captured by the camera. According to this example, the detection of the relative position between the bar and the calibration device is performed by viewing and processing the images of the targets. According to an example, the service target is connected to the calibration device. According to an example, this connection is accomplished by means of an arm. The arm may comprise a first portion, fixed to the calibration device. The arm may comprise a second portion, connected to the service target. According to an example, the second portion is movable relative to the first portion in such a way that the service target is movable between an active position, wherein it is visible by the cameras, and an inactive position, away from the active position. According to an example, in the inactive position the service target is not visible by the camera. It should be noted that in the inactive position the service target may be present in or absent from the field of vision of the cameras. In the inactive position, the service target is configured to leave the field of vision free, in such a way that the camera is able to correctly view the vehicle target, without the service target obstructing the view.

This solution allows the service targets to be removed from the cameras in a convenient and temporary manner, to allow the cameras to process only the images of the vehicle target (for example, when the alignment detection operations must be performed). According to an example, the calibration device may be movable vertically relative to the arm, in such a way that the cameras can see the vehicle targets without obstacles. In other words, in this configuration the arm supports a fixed target, and to allow the camera to view the vehicle targets without obstacles the calibration device can be moved.

According to an example, the calibration device comprises a further camera. The further camera is oriented towards the service area. In particular, with regard to the further camera, reference is made to document 102025000002361, which is incorporated herein by reference. For example, the apparatus may comprise one or more cameras of the type described in the document. In particular, the further camera may be a camera oriented in such a way that a relative field of vision includes a part of the service area positioned between the supporting structure and the vehicle. According to an example, the further camera is connected to the control unit. Further, the control unit is configured to make available in real time service information including the images captured by the further camera, by means of a graphical interface.

According to an example, the TV screen of the calibration device may act as a display unit, that is to say, it may allow the user to view images captured by one or more cameras of the apparatus.

According to an example, the apparatus comprises a sensor system. The sensor system includes an inclination sensor. For example, the sensor system includes one or more sensors between an inclinometer, an accelerometer, a gyroscope. According to an example, the sensor system includes a position sensor. For example, the sensor system includes one or more sensors between potentiometers, linear encoders, digital encoders. It should be noted that, according to this example, the function of the linear sensor may also be performed by an electronic counter, associated with a stepping motor which controls the horizontal or vertical movements. According to an example, the sensor system is designed to measure an inclination and a positioning of the calibration device relative to the supporting structure, respectively. According to an example, the sensor system is designed to measure an inclination and/or a translation of the bar. Preferably, the sensor system is configured to measure the height of the horizontal bar, relative to the ground.

According to an example, the positioning information includes data captured by the sensor system. Preferably, but not exclusively, the sensor system is an alternative to the viewing of the service targets, for determining the relative position between the bar and the calibration device.

According to an example, the supporting structure comprises a single pole. According to this example, the rear face and the front face are opposite faces defined by the single pole. According to this example, the horizontal bar is located on the rear face of the pole, and the calibration device is located on the front face of the pole. This solution makes the structure particularly balanced and stable, especially during the movement steps. According to an example, the supporting structure includes a housing, stationary relative to the slider. The housing is configured for receiving and supporting the calibration device. The term "housing" is used to mean a seat, a coupling or a mechanical contact element. According to this example, the calibration device is connected to the connection unit in a removable fashion, so that it can be detached from it and associated with the housing. Thus, the calibration device is connected in a removable fashion to the connection unit and is connected in a removable fashion to the housing. Therefore, the present description also provides an apparatus capable of carrying out vehicle alignment operations, with the possibility of integrating a calibration device capable of calibrating one or more ADAS sensors of the vehicle. In particular, this solution makes it possible to release the connection device from the horizontal bar. This is advantageous, for example, in the alignment detection operations with the vehicle positioned on the workshop lift, in which the horizontal bar must rise vertically to view the vehicle targets which are in a raised position. If the calibration device were rigidly connected to the bar, it would be forced to rise vertically, substantially modifying the barycentre of the structure and generating instability. By means of that solution, the calibration device can remain fixed in the housing (for example, in a position proximal to the base and/or to the ground), whilst the bar rises vertically.

According to an example, the calibration device is configured to perform the following movements:
- vertical translation along a vertical direction;
- horizontal translation along a horizontal direction. The horizontal direction is a direction perpendicular to the vertical direction and to a transversal direction. The transversal direction is a direction of moving of the calibration device towards and/or away from the vehicle relative to the vehicle;
- rotating about a vertical axis;

According to an example, the connection unit comprises a plate. The plate is connected to the slider. The plate is configured to rotate about the vertical axis. According to an example, the connection unit comprises a slide. The slide is connected to the plate. The slide is configured for translating, relative to the plate, along the horizontal direction. According to this example, the calibration device is connected to the slide. This solution makes it possible to mechanically couple the horizontal bar and calibration device, in a particularly advantageous manner wherein the translation along the horizontal direction occurs downstream of the rotation about the vertical axis. According to an example, the slide is configured for translating, relative to the plate, along the transversal direction. This solution easily allows small movements towards / away from the calibration device relative to the vehicle.

According to an example, the lens of the cameras is a fixed focus lens. The cameras are configured to focus the images of the vehicle targets positioned on the wheels of the vehicle. This solution is particularly advantageous, as it allows the capturing of the vehicle targets which are at a distance from the cameras within a range of acceptability of the lens of the camera. According to an alternative embodiment, the cameras can be provided with a variable focus lens. However, the variable focus lens would force the control unit to capture two images. This is more inconvenient, so the fixed focus lens is more advantageous. According to an example, the acceptability range is 2 to 10 m. According to an example, one of the cameras is configured to simultaneously see the service target and one or more of the vehicle targets. Preferably, each camera of the horizontal bar (positioned at an end of the bar) is configured for viewing a respective service target, and a respective vehicle target. According to an example, the control unit is programmed to process image data of a single image, to discriminate image data relevant to the service target from image data relevant to the vehicle target. According to an example, the service target is at a distance outside the focusing range of the lens of the camera. For example, the service target is 0.5 m from the camera; thus, the service target is blurred in the image of the camera. This solution allows the control unit to distinguish between the vehicle target, whose representation in the image is "clean", and the service target, whose representation in the image is blurred, and must be processed to make it "clean".

According to an example, the control unit is programmed to discriminate the image data relevant to the service target from the image data relevant to the vehicle target, in the single image. This discrimination occurs according to a predetermined criterion, depending on a position and/or a shape of the service target and/or on the pattern of the service target. The predetermined criterion may be, for example, the distance and/or the position of the target relative to the lens, the geometrical shape of the target, or the discrimination may occur as a function of graphical characteristics and/or graphic signs present on the targets, wherein the signs of the vehicle target are generally different from the signs of the service target. According to an example, the service target has a reflective portion. The reflective portion may comprise, for example, a layer of reflective material positioned on the target or in one of the layers which normally make it up. The reflective portion is configured for reflecting a light of wavelength in a predetermined spectrum. According to an example, the apparatus comprises, for each camera, an illuminator. Each illuminator is configured to illuminate the service target with a beam of light having a wavelength in said predetermined spectrum. According to this example, the control unit is configured for controlling the camera to capture a first and a second image in quick succession. The control unit is further configured for controlling the illuminator to be switched on at the first image and switched off at the second image, or vice versa. The control unit is programmed for processing said first and second images, for comparing them. According to a preferred example, the predetermined spectrum is the infrared spectrum.

According to an example, the apparatus comprises a further service target. Each service target is configured to be viewed respectively by a camera of the cameras located at the ends of the horizontal bar. In that way, each camera is configured for capturing an image comprising a service target and a vehicle target. For example, the camera positioned at the first end of the bar may view a first service target and a first and/or a second vehicle target (for example, those positioned on the left side of the vehicle), whilst the camera positioned at the second end of the bar may view a second service target and a third and/or a fourth vehicle target (for example, those positioned on the right side of the vehicle).

According to an example, the base is a single base, to which the supporting structure is connected. The term "single base" means a single structure positioned on a single carriage provided with pivoting wheels. According to a further example, the supporting structure includes a single pole. Alternatively, the supporting structure may include two poles, both rising vertically from the base upwards. According to this example, the horizontal bar is positioned on a rear pole, operatively distal from the vehicle, whilst the calibration device is positioned on a front pole, operatively proximal to the vehicle.

According to a further example, the base comprises a first structure and a second structure. The first and the second structure of the base can be coupled to each other. According to an example, the first and the second structure can be coupled mechanically in such a way as to define a precise reciprocal position. Preferably, in this configuration each structure of the first and second structures is provided with three wheels, in such a way that it can be autonomous in the movement. Preferably, each structure is provided with a carriage with four wheels.

According to an aspect of the invention, the invention provides a method for assistance a vehicle positioned in a work area. The method comprises a step of preparing a single base. The single base is provided with pivoting wheels to move on a supporting surface. The method comprises a step of preparing a supporting structure. The supporting structure is connected to the base. The supporting structure extends vertically from it. The supporting structure includes a pole. The pole is provided with a front face, operatively facing the work area. The supporting structure includes a rear face. The pole is interposed between the front face and the rear face. The method comprises a step of preparing a horizontal bar. The horizontal bar is elongate between a first and a second end. The horizontal bar is provided, at the first and the second end, with cameras. According to an example, each camera is provided with a predetermined optical system. The cameras are operatively facing towards the work area, to view targets positioned on the wheels of the vehicle. The method comprises a step of preparing a calibration device. The calibration device is configured to assist the user in calibration operations of an ADAS sensor of the vehicle. The calibration device is positioned in front of the front face. The calibration device is movable vertically relative to the supporting structure. The method comprises a step of preparing a connection unit. The connection unit is configured for connecting the horizontal bar and the calibration device to the supporting structure. According to an example, the calibration device is movable independently of the horizontal bar. The method comprises a step of preparing a vertical guide. The vertical guide is positioned at the rear face. The method comprises a step of preparing a slider. The slider is slidably coupled to the vertical guide. The method comprises a step of preparing a further vertical guide. The further vertical guide is positioned at the front face. The method comprises a step of preparing a further slider. The further slider is slidably coupled to the further vertical guide. The method comprises a step of connecting the horizontal bar to the slider, for sliding along the vertical guide. According to an example, the method also comprises a step of connecting the calibration device to the further slider. It should be noted that in one or more of these configurations, the pole is interposed between the horizontal bar and the calibration device.

The method comprises a step of preparing a control unit. The control unit is connected to the cameras. According to an example, the control unit is designed to exchange, directly or indirectly, data with an electronic control unit of the vehicle. In this way, the control unit assists the user in the calibration of the ADAS sensor. The data exchange takes place according to known technologies and according to procedural steps provided by the vehicle manufacturer and/or by the manufacturer of the specific ADAS sensor. According to an example, the method comprises a step of, by means of the cameras, capturing images of the targets associated with the wheels of the vehicle. The method comprises a step of, by means of the control unit, processing images captured by the cameras, to derive information on a vehicle alignment. The method further comprises a step of, by means of the control unit, providing assistance to the user in the operations for calibrating the ADAS sensors of the vehicle.

In an example, the control unit receives positioning information. The positioning information represents a relative position between the calibration device and the horizontal bar. Indeed, the independence of movement between the calibration device and the horizontal bar generates an unknown in the control unit. Advantageously, the control unit is then configured to receive or derive positioning information.

According to an example, the method comprises a step of associating a service target to the calibration device. According to this example, the service target enters the field of vision of one of the cameras. According to an example, the method comprises a step of associating a further service target to the calibration device. According to this example, the further service target enters the field of vision of a camera different from that which sees the service target.

According to an example, the method comprises a step of, by means of the cameras, capturing images of the service target and/or of the further service target. These images therefore comprise image data of the targets of the wheels and image data of a service target. The method comprises a step of processing image data, by means of the control unit, depending on the type of lens of the cameras. The control unit processes processed image data having a first blur intensity, and generates regularised image data. The regularised image data has a second blur intensity. The second blur intensity is lower than the first blur intensity. The method comprises a step of, by means of the control unit, processing image data of the vehicle targets and regularised image data of the service target. In this way, the control unit determines positioning information, representative of a mutual positioning between the calibration device and the vehicle. According to an example, the method comprises a step of moving the horizontal bar upwards, by sliding the slider vertically. According to this example, the calibration device or, more precisely, its lower end is kept in a stationary position, at a height lower than that of the bar.

According to an example, the lens of the cameras has a fixed focus, and the method comprises a step of focusing images of the vehicle targets positioned on the wheels of the vehicle. The method comprises a step of viewing, simultaneously, the service target and one or more vehicle targets. The method comprises a step of processing image data of a single image, to discriminate image data relevant to the service target from image data relevant to the vehicle target. According to a further example, the service target has a reflective portion, configured for reflecting a wavelength of light in a predetermined spectrum. According to this example, the apparatus comprises, for each camera, an illuminator, configured to illuminate the service target with a beam of light having a wavelength in said predetermined spectrum. The method comprises a step of capturing a first and a second image in rapid succession. The method comprises a step of switching on the illuminator at the first image and switching off the illuminator at the second image, or vice versa. The method comprises a step of processing said first and second images, for comparing them. According to an example, the method comprises a step of preparing a further pole. The horizontal bar is associated with the pole and the calibration device is associated with the further pole. According to an alternative example, the method comprises a step of preparing a further base. The further pole is associated with the further base. The method comprises a step of stably connecting the further base to the base. According to an example, the method comprises a step of associating the further pole with the base, in a position in front of the front face of the pole. Thus, the base constitutes a single base, that is to say, a single structure which is rigidly movable on the supporting surface.

These and other features of the invention will become more apparent from the following detailed description of a preferred, non-limiting example embodiment of it, with reference to the accompanying drawings, in which:

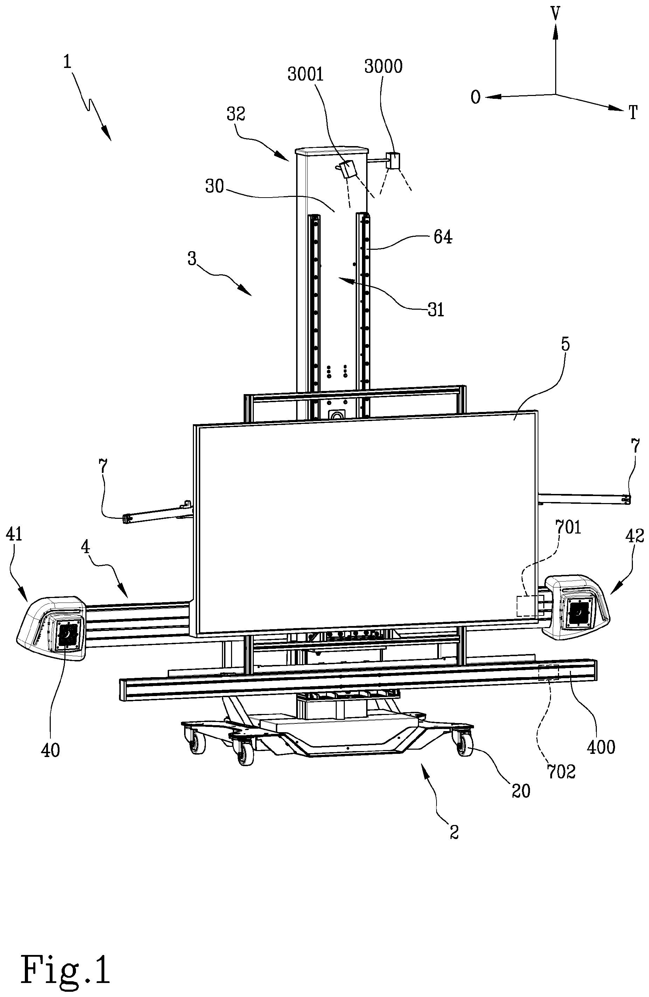

- Figure 1 is a front view of a vehicle assistance apparatus;

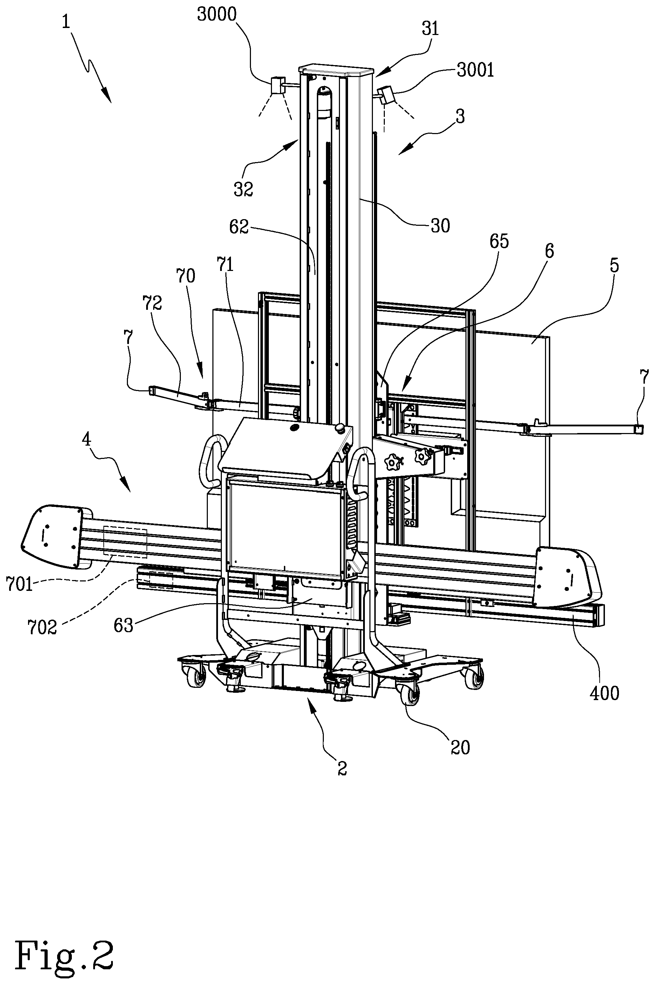

- Figure 2 is a rear view of a vehicle assistance apparatus;

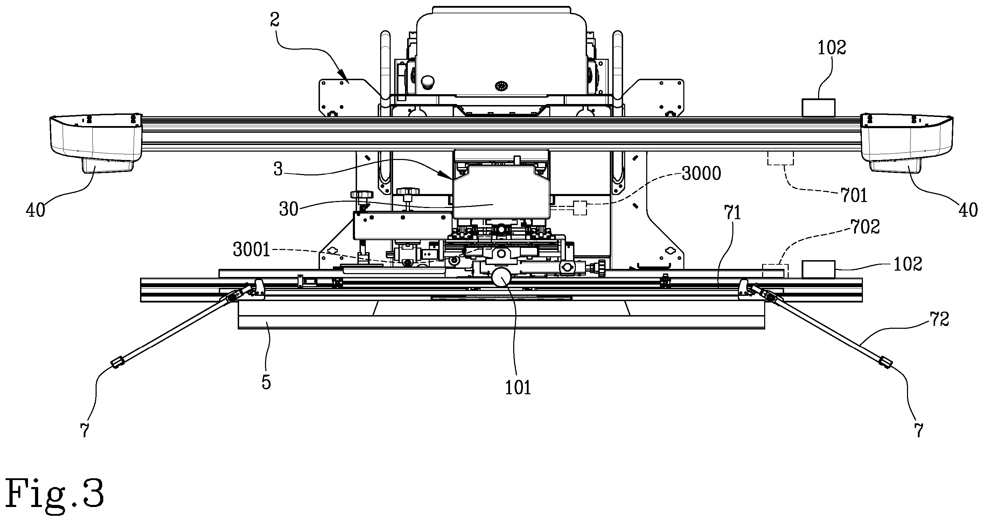

- Figure 3 is a plan view of a vehicle assistance apparatus;

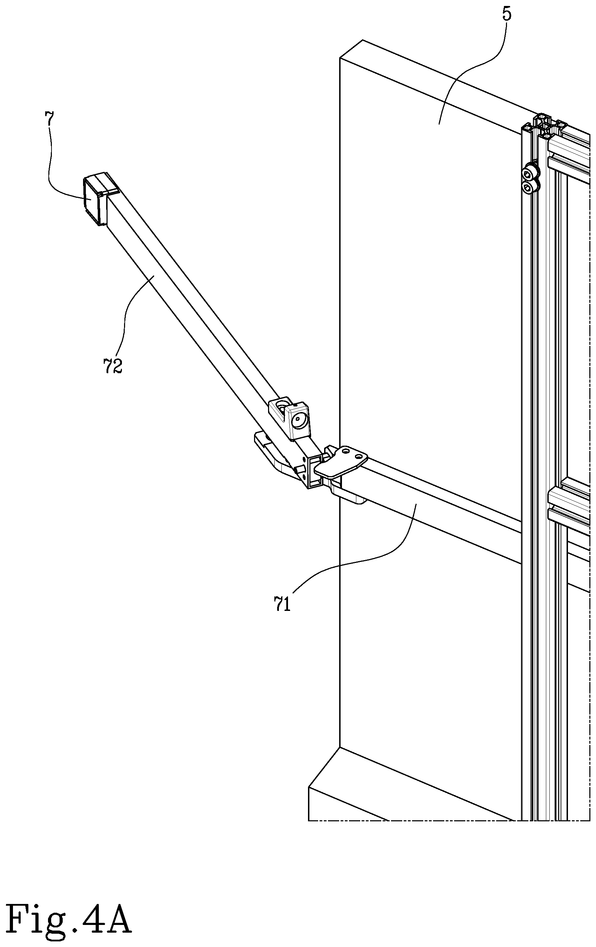

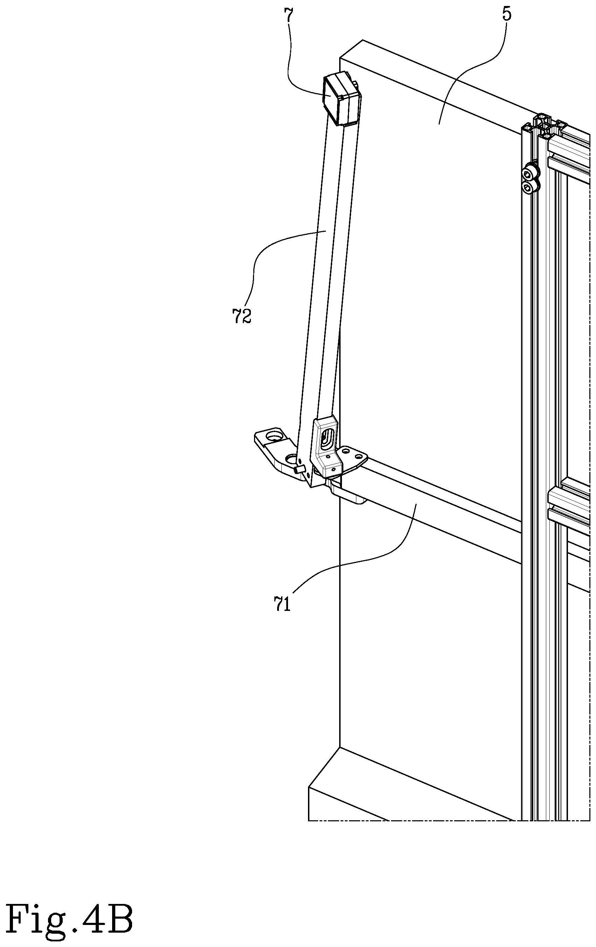

- Figures 4A, 4B illustrate a detail of the service target associated with the calibration device;

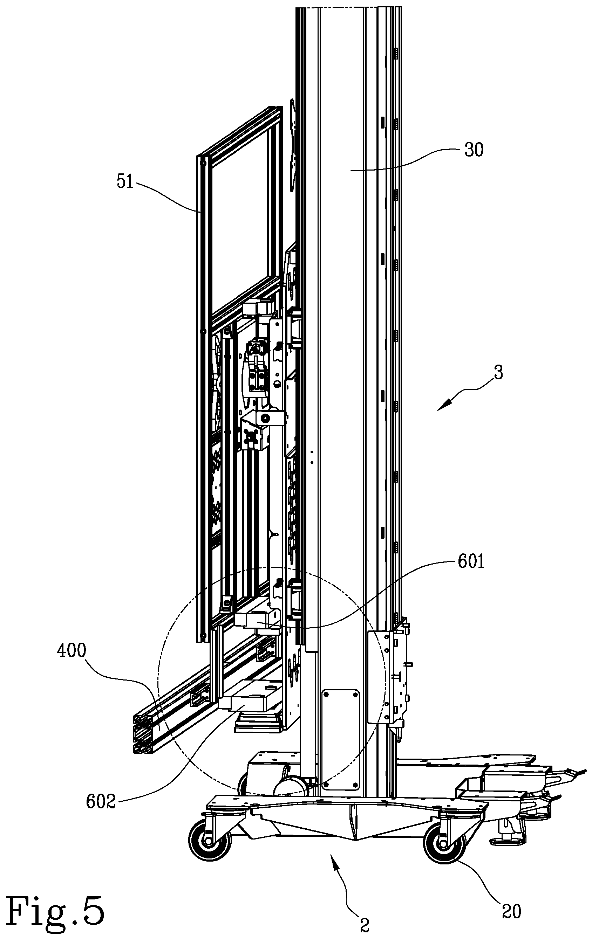

- Figure 5 is a simplified perspective view of the apparatus, showing a method for connecting the calibration device to the supporting structure;

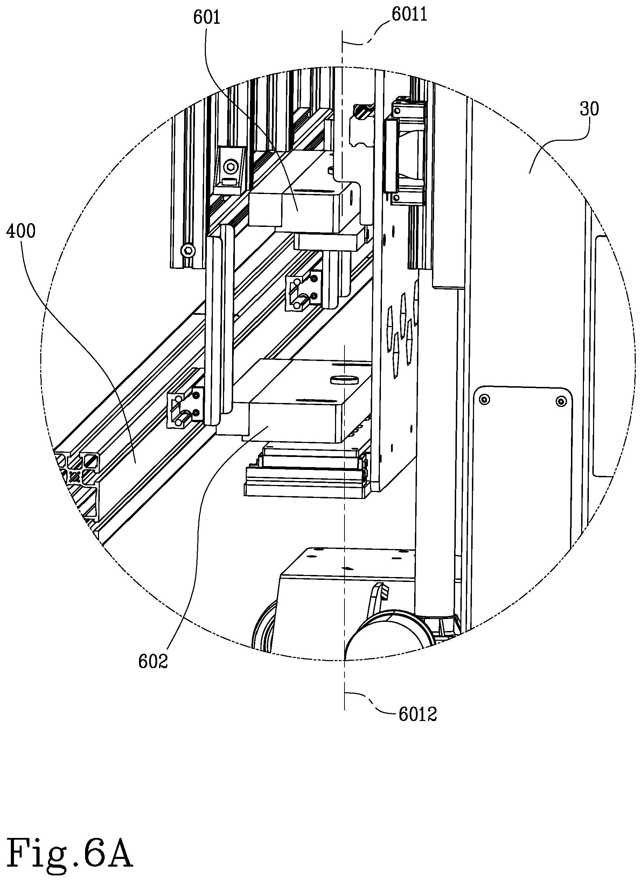

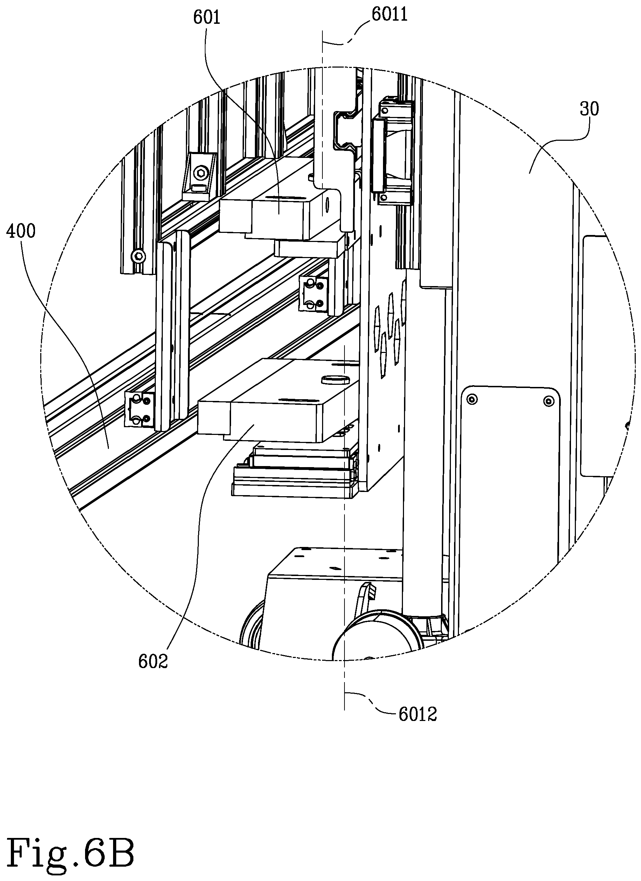

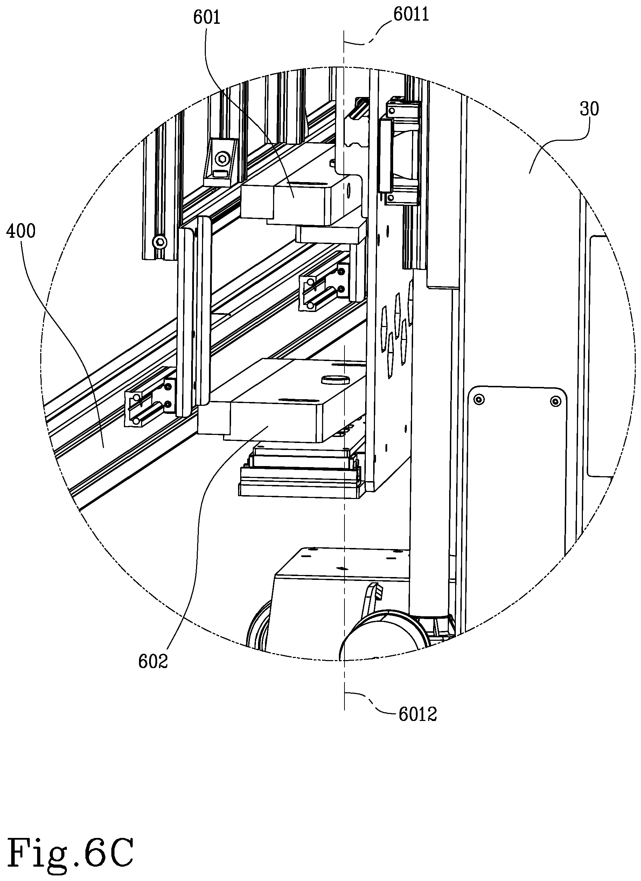

- Figures 6A, 6B, 6C illustrate steps of moving the calibration device.

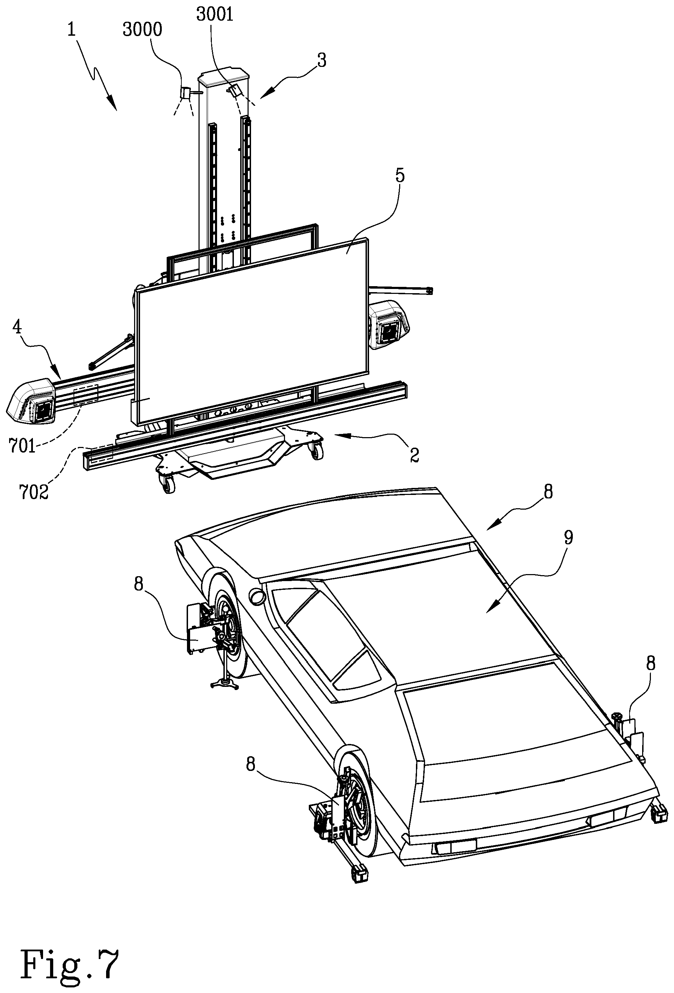

- Figure 7 is an overall view of the service area and of the vehicle.

In this description, the numeral 1 denotes a vehicle assistance apparatus 9 operatively positioned in a service area. The apparatus 1 comprises a base 2. Preferably, the base 2 is provided with pivoting wheels 20, for moving on a supporting surface. According to an example, the base is a single base, that is to say, a single structure. The apparatus comprises a supporting structure 3, connected to the base 2 and extending vertically from the base 2. The supporting structure 3 includes a pole 30, provided with a front face 31, operatively facing the work area. The supporting structure 3 comprises a rear face 32. The pole 30 is interposed between the front face 31 and the rear face 32. The apparatus comprises a horizontal bar 4, elongate between a first end 41 and a second end 42. The horizontal bar 4 is provided, at the first end 41 and at the second end 42, with cameras 40.

According to an example, the horizontal bar 4 is a foldable bar. According to an example, the horizontal bar includes a further camera. For example, the bar 4 includes the two cameras positioned at the end and a third camera. The cameras 40 are operatively facing towards the work area and are configured for viewing at least one vehicle target 8. The apparatus 1 comprises a calibration device 5, configured for assisting the user in the calibration operations of an ADAS sensor of the vehicle 9. The calibration device 5 is positioned in front of the front face 31 of the supporting structure 3 and is movable vertically relative to the supporting structure 3.

According to an example, the calibration device 5 is movable independently relative to the horizontal bar 4. According to an example, the calibration device 5 may be integral with the horizontal bar 4. The apparatus 1 comprises a control unit, connected to the cameras 40. The control unit is configured to process images captured by the cameras 40 and to derive information on a alignment of the vehicle 9. The control unit is programmed to assist the user in the operations for calibrating the ADAS sensors. For example, the control unit is configured to exchange data, directly or indirectly, with an electronic control unit of the vehicle 9. The apparatus 1 comprises a connection unit 6, configured for connecting the horizontal bar 4 and the calibration device 5 to the supporting structure 3. The apparatus 1 comprises a vertical guide 62, positioned at the rear face 32 of the supporting structure 3. The connection unit includes a slider 63, slidably coupled to the vertical guide 62. The horizontal bar 4 is connected to the slider 63, so that the pole 30 is interposed between the horizontal bar 4 and the calibration device 5. According to an example, the apparatus 1 comprises a further vertical guide 64, positioned on the front face 31. According to an example, the connection unit includes a further slider 65, slidably coupled to the further vertical guide 64. According to that example, the horizontal bar 4 is connected to the slider 63 and the calibration device 5 is connected to the further slider 65. According to an example, the apparatus 1 comprises a service target 7, associated with the calibration device 5. According to an example, the service target 7 is rigidly connected to the calibration device 5, and is positioned in such a way as to enter the field of vision of one of the cameras 40. According to an example, the control unit is configured for processing image data of the targets 8 of the vehicle 9 and of the service target 7, for determining positioning information, representative of a mutual positioning between the calibration device 5 and the vehicle 9. According to an example, each camera 40 includes a prior art optical system. According to an example, the control unit is programmed to process the image data relevant to the service target 7, to reduce a blurring, depending on the type of optical system. According to an example, the control unit is configured to receive positioning information, representative of a relative position between the calibration device 5 and the horizontal bar 4. The control unit is programmed for processing the images of the cameras 40 and the positioning information to derive a mutual positioning between the calibration device 5 and the vehicle 9.

According to an example, the positioning information comprising images of the service target 7, captured by the camera 40, and the detection of the relative position between the bar 4 and the calibration device 5 is performed by viewing and processing the images of the service targets 7. According to an example, the service target 7 is connected to the calibration device 5 by means of an arm 70, which comprises a first portion 71, fixed to the calibration device 5 and a second portion 72, connected to the service target 7. The second portion 72 is movable relative to the first portion 71 so that the service target 7 is movable between an active position, wherein it is visible by the cameras 40, and an inactive position, away from the active position 40. According to an example, in the inactive position the service target 7 is not visible by the camera 40.

In a further example, the mutual positioning between the calibration device 5 and the horizontal bar 4 occurs via a sensor system. In particular, the control unit processes the signals received from the sensor system to derive synchronization information, representative of the mutual positioning between the calibration device 5 and the horizontal bar 4. According to an example, the sensor system, includes an inclination (tilting) sensor 102 and a position sensor 101. For example, the sensor system includes one or more sensors between an inclinometer, an accelerometer, a gyroscope. Preferably, the sensor system includes sensors of the MEMS type. Preferably, the system includes two inclination sensors, fixed respectively on the supporting structure 3 and on the horizontal bar 4, and configured to determine a mutual inclination between the supporting structure 3 and the horizontal bar 4. It should be noted that the measurement of the inclination occurs, by the nature of the sensor, relative to the vertical direction (the direction of the force of gravity). Preferably, the inclinometers are mounted in a skew fashion. In effect, if an axis of the inclinometer were parallel to that of gravity (a vertical axis) the possibility of identifying the orientation relative to the vertical axis would be lost.

According to an example, the sensor system includes a position sensor 101. For example, the sensor system includes one or more sensors between potentiometers, linear encoders, digital encoders. The position sensor 101 is configured for determining a difference in height between the horizontal bar 4 and supporting structure 3. According to an example, the position sensor 101 (or the position sensors 101) is configured for determining a horizontal translation of the calibration device 5. According to an example, there is a position sensor configured to determine the movement along the transversal direction of the calibration device 5.

It should be noted that sensors may be used which are integrated in an actuation system or in a drive system. For example, the apparatus may comprise a stepping motor which comprises a system for tracking the steps of the motor and therefore tracking the movement of the motor actuator.

According to an example, the sensor system is designed to determine an inclination and a positioning of the calibration device relative to the supporting structure, respectively. According to an example, the sensor system is designed to measure an inclination of the calibration device and of the bar. Preferably, the sensor system is configured to measure the height of the horizontal bar 4 and of the calibration device, relative to a reference plane, for example relative to the supporting plane.

According to an example, the positioning information includes data captured by the sensor system. Preferably, but not exclusively, the sensor system is an alternative to viewing the service target 7, for determining the relative position between the bar 4 and the calibration device 5.

It should also be noted that there is an initial calibration step, wherein the various components of the apparatus 1 are calibrated in a reference position or "zero position". According to an example, the calibration of the vertical position of the calibration device 5 and of the bar 4 is performed by positioning the calibration device 5 and the bar 4 at the same height, for example at a common full scale position. The difference in the measurements of the position sensors 101 associated with the vertical translation of the calibration device 5 and the bar 4 constitutes an "offset" which is suitably considered in the calculations of difference in height between the calibration device 5 and the bar 4.

According to an example, the calibration of the mutual orientation between the calibration device 5 and the bar 4 is performed as follows: both on the calibration device 5 and the bar 4 two grooves are provided (or, in an equivalent manner, two holes) suitable for housing a reference bar. Preferably, the two grooves are symmetrical relative to the centre (or axis of symmetry) of the calibration device 5 and the bar 4, respectively. When the calibration device 5 and the bar 4 are at the same height, the corresponding grooves are facing or almost facing each other. If necessary, the transversal translation of the calibration device 5 is adjusted until the first pair of grooves is perfectly facing each other. In these conditions, the reference bar is positioned at the first pair of grooves. If necessary, the rotation of the calibration device 5 about the vertical axis is adjusted in such a way that the bar is perfectly in the seat in the grooves. According to an example, for a check, the bar is moved from the first pair of grooves to the second pair of grooves. According to another example, it is possible to use a further bar identical to the first. According to yet another example, the two bars may be replaced by a suitably shaped frame. In practice, with these operations it is possible to mutually position the calibration device 5 and the bar 4 in such a way as to be centrally aligned and parallel to each other. The measurement of the position sensor 101 associated with the transversal translation of the calibration device 5 constitutes an "offset" which is suitably considered in the calculations of the transversal position of the calibration device 5. It should be noted that the bar 4 does not translate transversely but only vertically. The measurement of the inclination sensor 102 associated with the calibration device 5 makes it possible to determine how (a reference system integral with) the calibration device is oriented relative to the force of gravity (to the vertical axis). Similarly, the measurement of the inclination sensor 102 associated with the bar 4 makes it possible to determine how (a reference system integral with) the bar 4 of the calibration device is oriented relative to the force of gravity (to the vertical axis). By combining this information it is therefore possible to determine the reciprocal orientation between the calibration device 5 and the bar 4. This initial calibration step substantially determines a series of "offsets" between the signals of the various sensors, which is taken into consideration for the processing of the various reciprocal positions between components of the apparatus 1. According to an example, the supporting structure 3 comprises a single pole 30. According to this example, the rear face 32 and the front face 31 are opposite faces defined by the single pole 30. According to this example, the horizontal bar 4 is located on the rear face 32 of the pole 30, and the calibration device 5 is located on the front face 31 of the pole 30. According to an example, the supporting structure 3 includes a housing, stationary relative to the slider, and configured for receiving and supporting the calibration device 5. According to this example, the calibration device 5 is connected to the connection unit 6 in a removable fashion, so that it can be detached from it and associated with the housing.

In a further example, the mutual positioning between the calibration device 5 and the horizontal bar 4 occurs via a camera and a pair of targets. Specifically, in an example, the apparatus 1 includes a first synchronization target 701 and a second synchronization target 702, connected to the horizontal bar 4 and the calibration device 5, respectively. The apparatus 1 also includes a synchronization camera 3000, for viewing the first and second synchronization targets 701,702, and for transmitting image data of the first and second synchronization targets 701,702 to the control unit. The control unit processes this image data of the first and second synchronization targets 701,702, to determine the synchronization information (representative of a mutual positioning between the calibration device 5 and the horizontal bar 4).

In one example, the pole 30 includes a lower portion, proximal to the base 2, and an upper portion, distal from the base 2 along the vertical direction V. The synchronization camera 3000 is connected to the upper portion of the pole 30 and frames both synchronization targets 701, 702 from above. In one example, the apparatus 1 includes a calibration rod 400, connected to the calibration device 5 (fixedly or movably) to support a calibration element, such as a mirror for calibrating a radar sensor. Preferably, the second synchronization target 702 is connected to the calibration rod 400. In an example, the synchronization camera 702 is an infrared camera.

In an example, the apparatus 1 includes a calibration target connected to the calibration rod 400 to be viewed by at least one camera 40 of the horizontal bar 4. The control unit is configured to receive image data of the calibration target and process that data to derive a mutual positioning between the calibration device 4 and the horizontal bar 5.

In an example, the apparatus includes an upper camera 3001 connected to the upper portion of the pole 30 at the front face 31 of the pole 30, so that it is operationally facing the work area. The control unit is connected to the upper camera 3001 to detect a distance between the calibration device 5 and the ADAS sensor of the vehicle 9 to be calibrated. Specifically, the ADAS sensor of the vehicle 9 may include a reference or a sensor target that can be seen by the upper camera 3001.

According to an example, the apparatus 1 includes a control panel 50. The control panel 50 is connected to the control unit and is configured for interacting with the user. According to an example, the control panel 50 is connected to the supporting structure 3. According to a further example, the control panel 50 may include a PC. According to this example, the PC may be mounted on the supporting structure 3, in such a way as to be integral with the slider 63. According to an example, the control panel 50 includes a screen and/or a user interface.

According to a further example, the control panel 50 is located at a rear position of the apparatus 1. The rear position is defined in such a way that the supporting structure 3 is interposed between the rear position and the vehicle 9. On the other hand, the prior art solutions in the field of the alignments comprise a screen located in a position in front of the apparatus 1. According to an example, the apparatus includes movement handles, which are also positioned in a rear position.

It should be noted that the multiplicity of functions of the apparatus 1, in particular those which require the viewing of the user, may be implemented both by the calibration device 5 (if it is a TV screen), and by the screen of the control panel, or by the two of them. For example, when the user performs the alignment operations (the user may be physically under the lift bridge), he/she can read data in real time on the television. Or, if the user must, for example, position the targets 8 for measuring the height of the chassis of the vehicle 9, connect the diagnostic tool to the socket of the electronic control unit of the vehicle 9, or switch on the instrument panel, the user can use the screen of the control panel 50 or can use a tablet and, in that case, the TV screen may act as a repeater of the tablet. This is particularly convenient if the user's hands are occupied. According to an example, the calibration device is configured to perform the following movements:
- vertical translation along the vertical guide 62;
- horizontal translation along a horizontal direction O. The horizontal direction O is a direction perpendicular to the vertical direction and to a transversal direction T. The transversal direction T is a direction of moving towards and/or away of the calibration device 5 from the vehicle 9;
- rotation about a vertical axis V;

According to an example, the connection unit 6 comprises a plate, connected to the slider 63 and configured for rotating about the vertical axis V. According to an example, the connection unit 6 comprises a slide, connected to the plate and configured for translating, relative to the plate, along the horizontal direction O. According to that example, the calibration device 5 is connected to the slide.

According to an example, the calibration device 5 is configured to translate along the transversal direction T. According to a further example, the calibration device 5 is configured to rotate about a horizontal axis and/or about a transversal axis. According to an example, a movement (that is to say, one or more translations and/or one or more rotations) of the calibration device 5 may be:
- manual, that is to say, the calibration device can be moved by the user by means of, for example, guides, knobs, handles and/or worm screws;
- semi-automatic, that is to say, the calibration device can be moved by the user by means of the control panel, wherein the operator can select a movement and wherein the apparatus includes suitable actuators configured for receiving the command from the control panel (by means of the control unit) and actuating the calibration device 5 for translating and/or rotating according to the command of the user.
- automatic, that is to say, the calibration device 5 moves autonomously according to a predetermined procedure. For example, the operator can select a start command, and the apparatus 1 performs the calibration autonomously and, within the various calibration steps, moves the calibration device 5.

According to an example, the lens of the cameras 40 is a fixed focus lens. The cameras 40 are configured to focus the images of the vehicle targets 8 positioned on the wheels of the vehicle 9. According to an alternative embodiment, the cameras 40 can be provided with a variable focus lens. According to an example, one of the cameras 40 is configured to simultaneously see the service target 7 and one or more of the vehicle targets 8. Preferably, each camera 40 of the horizontal bar 4 (located at the end of the bar) is configured for viewing a respective service target 7, and a respective vehicle target 8. According to an example, the control unit is programmed to process image data of a single image, to discriminate image data relevant to the service target 7 from image data relevant to the vehicle target 8. According to an example, the service target 7 is at a distance outside the optimum range for focusing the lens of the camera 40. According to an example, the control unit is programmed to discriminate the image data relevant to the service target 7 from the image data relevant to the vehicle target 8, within a single image. According to an example, the service target 7 has a reflective portion, configured for reflecting a wavelength of light in a predetermined spectrum. According to an example, the apparatus 1 comprises, for each camera 40, an illuminator, configured to illuminate the service target 7 with a beam of light having a wavelength in the predetermined spectrum. According to this example, the control unit is configured for controlling the camera 40 to capture a first and a second image in quick succession, and controlling the illuminator to be switched on at the first image and switched off at the second image, or vice versa. The control unit is programmed for processing said first and second images, for comparing them. According to a preferred example, the predetermined spectrum is the infrared spectrum. According to an example, the apparatus comprises a further service target 7. The further service target 7 is positioned on the opposite side of the calibration device relative to the service target 7. Each service target 7 is configured to be viewed respectively by a camera of the cameras 40 located at the ends of the horizontal bar 4. According to an example, the base 2 is a single base, to which the supporting structure 3 is connected. According to a further example, the supporting structure 3 includes a single pole 30. Alternatively, the supporting structure 3 may include two poles, both rising vertically from the base 2 upwards. According to this example, the horizontal bar 4 is positioned on a rear pole, that is to say, the one operatively distal from the vehicle 9, whilst the calibration device 5 is positioned on a front pole, that is to say, the one operatively proximal to the vehicle.

A description is given below of a possible method for connecting the calibration device 5 to the supporting structure 3, using a particular embodiment of the connection unit 6. The calibration device 5 includes a supporting frame 51, interconnecting the target panel or the TV screen to the connection unit 6. The connection unit 6 includes an upper plate 601 and a lower plate 602. The upper plate 601 is connected to the frame 51. The lower plate 602 is connected to the calibration bar 400. The upper plate 601 and the lower plate 602 are provided with a respective upper pivot 6011 and lower pivot 6012. The lower pivot 6012 has an axis of rotation different to the axis of rotation of the upper pivot 6011. In other words, the two pivots are offset. The frame 51 can rotate about both pivots. The frame 51 can also translate horizontally. According to an example, the frame 51 rotates, without translating, around the upper pivot 6011. The bar 400 is connected in a movable fashion to the frame 51, by two runners, on which the frame can slide. For example, the frame translates horizontally on the runners, relative to the bar 400 which remains fixed. The lower plate 602 is connected to the bar 400 and is movable relative to the supporting structure 3. In effect, the lower pivot 6012 is provided with a pin which has a clearance, which leaves the lower plate 602 free to rotate and translate, to compensate for the misalignment of the pivots. According to an example, the lower plate 602 is free to rotate and translate by means of cams. The cams allow a correct rotation of the lower plate 602 around the lower pivot 6012. In particular, the clearance or cams compensate for misalignment with a translation along a plane defined by the horizontal and transversal directions (plane parallel to the ground). Since the pivots are off centre, if one of the two does not have a clearance it would not be possible to allow a pure rotation of the frame 51, since this is rigidly connected to the two plates and the two plates have a different axis of rotation. Let us assume now that a rotation of the frame 51, for example in a clockwise direction, is to be performed. The frame 51 rotates about the upper pivot 6011 in an integral fashion with the upper plate 601, that is to say, the upper plate rotates without translating. At the same time, the lower plate 602 rotates, making use of the clearance or the cams present in the lower pivot 6012. The bar 400 follows the rotation of the frame 51, but since it is coupled by means of the runners, it remains stationary along the horizontal direction, whilst the frame translates on the runners. It should be noted that the distance between the rotation pivots varies during the rotation of the frame 51 (the pivots move away from and towards each other). Thus, the bar is fixed relative to the translation of the frame 51. The mirror, or another calibration component of the ADAS sensors, may also slide on the bar 400, which therefore has a translation independent of the translation of the frame 51. In other words, the translation (horizontal) of the frame 51 and the translation (horizontal) of the mirror mounted on the bar 400 are independent of each other. In particular, it should be noted that these translations do not occur one after the other.

In the following, we will schematically describe some of the ways in which the device 1, according to this description, allows the horizontal bar 4 to be synchronized with the calibration device 5 (i.e., determines its relative positioning, and possibly its positioning with respect to the vehicle 9).

A first method involves the use of the cameras 40 of the horizontal bar 4, which simultaneously display one or two service targets 7 and the vehicle targets 8, focusing them appropriately.

A second method involves the use of a sensor system that includes, for example, an inclinometer, an accelerometer, a gyroscope, a position sensor, a potentiometer, a linear or digital encoder. By mounting one or more of these sensors on the horizontal bar 4 and the calibration device 5 and communicating the information to the control unit, it is possible to obtain the synchronization information.

A third option involves using the synchronization camera 3000 to view the first synchronization target 701 and the second synchronization target 702. A fourth option involves mounting a calibration target on the calibration rod 400 and viewing that target with the calibration cameras. This option is also useful for calibrating device 1 (i.e., for calibrating device 1, not for calibrating the ADAS sensors of vehicle 9).

## Claims

1. An apparatus (1) for assisting a vehicle (9) positioned in a work area, comprising:
- a single base (2), provided with pivoting wheels (20) to move on a supporting surface;
- a supporting structure (3), connected to the base (2) and extending vertically from it, wherein the supporting structure (3) includes:
a pole (30), equipped with a front face (31), operatively facing the work area, and
a rear face (32), wherein the pole (30) is interposed between the front face (31) and the rear face (32);
- a horizontal bar (4), elongated between a first end (41) and a second end (42) and provided at the first end (41) and the second end (42) with cameras (40), operatively facing towards the work area to view targets (8) positioned on the wheels of the vehicle (9);
- a calibration device (5), configured to assist the user in the calibration operations of an ADAS sensor of the vehicle (9), positioned in front of the front face (31) and vertically movable with respect to the supporting structure (3);
- a control unit, connected to the cameras (40) and configured to process images captured by the cameras (40) and derive information on a alignment of the vehicle (9), the control unit being further programmed to assist the user in the operations for calibrating the ADAS sensors;
- a connection unit (6), for connecting the horizontal bar (4) and the calibration device (5) to the supporting structure (3),
**characterised in that** it comprises a vertical guide (62), positioned at the rear face (32), wherein the connection unit includes a slider (63) slidably coupled to the vertical guide (62), and wherein the horizontal bar (4) is connected to the slider (63), so that the pole (30) is interposed between the horizontal bar (4) and the calibration device (5).

2. The apparatus (1) according to claim 1, comprising a further vertical guide (64), associated with the front face (31) of the pole (30), wherein the connection unit (6) includes a further slider (65), slidably coupled to the further vertical guide (64), and wherein the calibration device (5) is connected to the further slider (65).

3. The apparatus (1) according to claim 2, wherein the control unit is configured to receive positioning information, representative of a relative position between the calibration device (5) and the horizontal bar (4).

4. Apparatus (1) according to claim 3, further comprising:
- a first synchronization target (701) and a second synchronization target (702), connected to the horizontal bar (4) and the calibration device (5), respectively;
- a synchronization camera (3000), configured to visualize the first and second synchronization targets (701,702), wherein the control unit is connected to the synchronization camera (3000) to receive image data of the first and second synchronization targets (701,702) from the camera (3000) and to process such data to determine synchronization information, representative of positioning information.

5. Apparatus (1) according to one of claims 3 or 4, comprising a calibration target, wherein a camera of the cameras (40) of the horizontal bar (4) is configured to visualize the calibration target, the control unit being configured to receive image data of the calibration target and process such data, to derive positioning information.

6. Apparatus according to any of the claims from 3 to 5, wherein the control unit is programmed to process the images of the cameras (40) and the positioning information to derive a mutual positioning between the calibration device (5) and the vehicle (9), and wherein the apparatus (1) comprises a service target (7), associated with the calibration device (5) and positioned in such a way as to enter a field of vision of one of the cameras (40) of the horizontal bar (4), the positioning information comprising images of the service target (7) captured by the camera (40).

7. The apparatus (1) according to claim 6, wherein:
the control unit is configured for processing image data of the vehicle targets (8) and of the service target (7), for determining positioning information, representative of a mutual positioning between the calibration device (5) and the vehicle (9), and
each camera (40) includes a prior art optical system, and
the control unit is programmed to process the image data relevant to the service target (7), to reduce a blurring, depending on the type of optical system.

8. The apparatus (1) according to claim 6 or 7, wherein the service target (7) is connected to the calibration device (5) by means of an arm (70) having a first portion (71), fixed to the calibration device (5), and a second portion (72), connected to the service target (7), wherein the second portion (72) is movable relative to the first portion (71) so that the service target (7) is movable between an active position, wherein it is visible by the cameras, and an inactive position, away from the active position.

9. The apparatus (1) according to any one of claims 3 to 8, comprising a sensor system, including an inclination sensor (101) and a position sensor (102), designed to measure an inclination and a positioning of the calibration device (5) relative to the supporting structure (3), respectively, and wherein the positioning information includes data captured by the sensor system.

10. The apparatus (1) according to any one of the preceding claims, wherein the supporting structure (3) comprises a single pole (30), and wherein the rear face (32) and the front face (31) are opposite faces defined by the single pole (30).

11. The apparatus (1) according to claim 12, wherein
the supporting structure (3) includes a housing, stationary relative to the slider (63) and configured for receiving and supporting the calibration device (5),
the calibration device (5) is removably connected to the connection unit (6), to be detachable from it and associated with the housing.

12. The apparatus (1) according to any one of the preceding claims, wherein the calibration device (5) is configured to perform the following movements:
- vertical translation along the vertical guide (62);
- horizontal translation along a horizontal direction (O), perpendicular to the vertical direction and to a transversal direction (T), the transversal direction (T) being a direction of moving towards and/or away of the calibration device (5) from the vehicle relative to the vehicle (9);
- rotation about a vertical axis (V);

13. A method for assisting a vehicle (9) positioned in a work area, comprising the following steps:
- preparing a single base (2), provided with pivoting wheels (20) for moving on a supporting surface;
- preparing a supporting structure (3), connected to the base (2) and extending vertically from it, wherein the supporting structure (3) includes a pole (30), provided with a front face (31), operatively facing the work area, and a rear face (32), wherein the pole (30) is interposed between the front face (31) and the rear face (32);
- preparing a horizontal bar (4), elongated between a first end (41) and a second end (42) and provided, at the first end (41) and at the second end (42), with cameras (40), operatively facing towards the work area to view targets (8) positioned on the wheels of the vehicle (9);
- preparing a calibration device (5), configured to assist the user in calibrating operations of an ADAS sensor of the vehicle (9), the calibration device (5) being positioned in front of the front face (31) and being movable vertically relative to the supporting structure (3);
- preparing a connection unit (6), for connecting the horizontal bar (4) and the calibration device (5) to the supporting structure (3);
- preparing a vertical guide (62), positioned at the rear face (32), and a slider (63) slidably coupled to the vertical guide (62);
- connecting the horizontal bar (4) to the slider (63) for sliding along the vertical guide (62), so that the pole (30) is interposed between the horizontal bar (4) and the calibration device (5);
- preparing a control unit, connected to the cameras (40) and designed to exchange, directly or indirectly, data with an electronic control unit of the vehicle (9),
The method comprises the following steps:
- by means of the cameras (40), capturing images of the targets (8) associated with the wheels of the vehicle (9);
- by means of the control unit, processing the images captured by the cameras (40) to derive information on an alignment of the vehicle (9);
- by means of the control unit, providing assistance to the user in the operations for calibrating the ADAS sensors of the vehicle (9).

14. The method according to claim 13, comprising a step of preparing a further vertical guide (64), associated with the front face (31) of the pole (30), and a further slider (65), slidably coupled to the further vertical guide (64), wherein the calibration device (5) is connected to the further slider (65) and slides along the further vertical guide (64).

15. The method according to claim 13, wherein the control unit receives positioning information, representative of a relative position between the calibration device (5) and the horizontal bar (4).
